## Europäisches Patentamt

## European Patent Office

## Office européen des brevets

(19)

(11) **EP 1 034 098 B1**

(12) **EUROPÄISCHE PATENTSCHRIFT**

(45) Veröffentlichungstag und Bekanntmachung des Hinweises auf die Patenterteilung:
 **25.02.2004 Patentblatt 2004/09**

(21) Anmeldenummer: **98965092.4**

(22) Anmeldetag: **27.11.1998**

(51) Int Cl.⁷: **B60R 21/32**, B60R 21/00

(86) Internationale Anmeldenummer:
 **PCT/DE1998/003493**

(87) Internationale Veröffentlichungsnummer:
 **WO 1999/028167 (10.06.1999 Gazette 1999/23)**

(54) **VERFAHREN UND VORRICHTUNG ZUR BILDUNG EINES AUSLÖSEKRITERIUMS FÜR EIN RÜCKHALTESYSTEM**

 PROCESS AND DEVICE FOR FORMING A RESTRAINT SYSTEM TRIGGERING CRITERION

 PROCEDE ET DISPOSITIF POUR CREER UN CRITERE DE DECLENCHEMENT DESTINE A UN SYSTEME DE RETENUE

(84) Benannte Vertragsstaaten:
 **DE FR GB IT SE**

(30) Priorität: **29.11.1997 DE 19753163**

(43) Veröffentlichungstag der Anmeldung:
 **13.09.2000 Patentblatt 2000/37**

(73) Patentinhaber: **ROBERT BOSCH GMBH**
 **70442 Stuttgart (DE)**

(72) Erfinder:
 • **HENNE, Michael**
  **D-74374 Zaberfeld (DE)**
 • **GROESCH, Lothar**
  **D-70374 Stuttgart (DE)**
 • **HAFNER, Sigrid**
  **D-70193 Stuttgart (DE)**
 • **BAUMANN, Torsten**
  **D-74252 Massenbachhausen (DE)**

(56) Entgegenhaltungen:
 WO-A-94/14638    DE-A- 4 117 811
 US-A- 5 513 109    US-A- 5 673 365

EP 1 034 098 B1

**Beschreibung**

Stand der Technik

Die vorliegende Erfindung betrifft ein Verfahren und eine Vorrichtung zur Bildung eines Auslösekriteriums für ein Rückhaltesystem in einem Fahrzeug, bei dem die Beschleunigung des Fahrzeugs in einer oder mehreren Richtungen gemessen wird und aus der gemessenen Beschleunigung mit Hilfe einer Fuzzy-Methode ein Kriterium abgeleitet wird, anhand dessen über ein Auslösen oder ein Nichtauslösen des Rückhaltesystems entschieden wird.

Ein solches Verfahren ist in der EP 0 458 796 B2 beschrieben. Dabei wird zunächst die Beschleunigung des Fahrzeugs gemessen und diese durch zeitliche Integration in eine Geschwindigkeit umgewandelt. Als Auslösekriterium wird ein Schwellwert benutzt, der in Abhängigkeit von einer oder mehreren vom Crashvorgang abgeleiteten Zustandsgrößen des Fahrzeugs veränderbar ist. Übersteigt die ermittelte Geschwindigkeit des Fahrzeugs diesen Schwellwert, so wird das Rückhaltesystem ausgelöst.

Aus der WO-A-94/14638 ist ein Verfahren zur Bildung eines Auslösekriteriums für ein Rückhaltesystem bekannt, bei dem mindestens zwei Auslöseschwellwerte für die Fahrzeugverzögerung durch eine Fuzzy-Methode unscharf definiert werden.

In der US-A-5,673,365 ist ebenfalls ein Verfahren beschrieben, bei dem mittels Fuzzyfizierung der Fahrzeugbeschleunigung entschieden wird, ob sich ein Fahrzeugcrash ereignet hat oder nicht.

Die Hauptanforderung an den Auslösealgorithmus eines Rückhaltesystems ist die Zuverlässigkeit der Auslösung. Dies bedeutet, daß er bei allen Crashes, bei denen ein Verletzungsrisiko für die Fahrzeuginsassen besteht, das Rückhaltesystem auslöst. Umgekehrt bedeutet es auch, daß er bei Crashes, bei denen eine Auslösung des Rückhaltesystems keinen Beitrag zur Verringerung des Verletzungsrisikos liefert, nicht auslösen darf. Eine Fehlauslösung des Rückhaltesystems ist unbedingt zu vermeiden. Denn eine Fehlauslösung könnte zur Folge haben, daß der Fahrer erschrickt und dadurch erst ein Unfall verursacht wird oder daß ein Fahrzeuginsasse durch einen Airbag selbst verletzt wird. Eine Fehlauslösung ist auch deshalb zu vermeiden, weil der Austausch eines ausgelösten Airbags unter Umständen teurer ist als die Reparatur des übrigen Fahrzeugs. Der Auslösealgorithmus sollte außerdem möglichst robust sein. Unter Robustheit versteht man eine sichere Auslösung oder Nichtauslösung auch bei Crashes, die nicht durch einen Crashtest vorher erfaßt worden sind.

Der Erfindung liegt daher die Aufgabe zugrunde, ein Verfahren und eine Vorrichtung zur Bildung eines Auslösekriteriums für ein Rückhaltesystem anzugeben, das sich durch eine möglichst große Robustheit auszeichnet.

Vorteile der Erfindung

Die genannte Aufgabe wird gemäß den Merkmalen der Ansprüche 1 bzw. 5 dadurch gelöst, daß ein Auslösekriterium, anhand dessen über ein Auslösen oder Nichtauslösen des Rückhaltesystems entschieden wird, mit Hilfe eines Fuzzy-Klassifikators gebildet wird, dem mindestens zwei Eingangsgrößen zugeführt werden. Dabei ist eine erste Eingangsgröße eine Laufzeit, die mit Überschreiten einer vorgegebenen Schwelle durch die gemessene Beschleunigung beginnt, und eine zweite Eingangsgröße berücksichtigt die aus der gemessenen Beschleunigung ermittelte Geschwindigkeitsänderung des Fahrzeugs. Durch die Anwendung der Fuzzy-Methode mit den genannten Eingangsgrößen läßt sich eine sehr robuste und zuverlässige Entscheidung auf Auslösung oder Nichtauslösung des Rückhaltesystems treffen.

Zweckmäßige Weiterbildungen der Erfindung gehen aus den Unteransprüchen hervor. Dabei kommt es der Robustheit und Zuverlässigkeit des Verfahrens zugute, wenn die zweite Eingangsgröße aus der Geschwindigkeitsänderung des Fahrzeugs, bezogen auf die Laufzeit, gebildet wird.

Eine weitere Verbesserung des Verfahrens bzw. der Vorrichtung hinsichtlich seiner Robustheit und Zuverlässigkeit ergibt sich, wenn dem Fuzzy-Klassifikator noch eine dritte Eingangsgröße zugeführt wird, die einer mittleren Steigung der gemessenen Beschleunigung entspricht.

Beschreibung eines Ausführungsbeispiels

Anhand eines in der Zeichnung dargestellten Ausführungsbeispiels wird nachfolgend die Erfindung näher erläutert. Es zeigen:

> Figur 1 ein Blockschaltbild der erfindungsgemäßen Vorrichtung,

> Figuren 2a, 2b, 2c Zugehörigkeitsfunktionen von drei Eingangssignalen und

> Figuren 3a, 3b zwei mögliche Zugehörigkeitsfunktionen des Ausgangssignals des Fuzzy-Klassifikators.

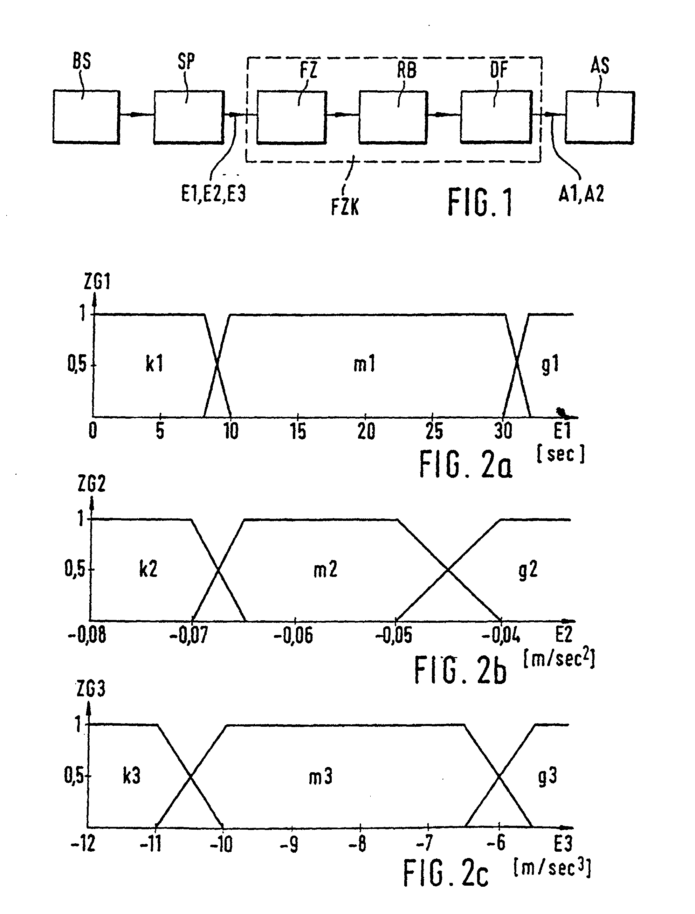

Wie der Figur 1 zu entnehmen ist, wird zur Bildung eines Auslösekriteriums für ein Rückhaltesystem zunächst von einem oder auch mehreren Beschleunigungssensoren BS die Beschleunigung eines Fahrzeugs in einer oder mehreren Richtungen gemessen. Das gemessene Beschleunigungssignal wird einem nachfolgenden Signalprozessor SP zugeführt. In dem Signalprozessor SP wird das gemessene Beschleunigungssignal zunächst gefiltert, um es von Störanteilen zu befreien und schließlich in ein Digitalsignal umgesetzt, damit es von einem Mikrocontroller weiterverarbeitet werden kann. Aus dem gemessenen Beschleunigungssignal werden im Signalprozessor SP mindestens zwei Eingangsgrößen E1, E2 für einen Fuzzy-Klassifikator FZK abgeleitet. Im dargestellten Ausführungsbeispiel wird zusätzlich noch eine dritte Eingangsgröße E3 gebildet, die aber für die Funktion des beschriebenen verfahrens nicht unbedingt erforderlich ist.

Die erste Eingangsgröße E1 ist eine Laufzeit i, die mit Überschreiten einer vorgegebenen Schwelle durch die gemessene Beschleunigung beginnt. Die Schwelle wird so gelegt, daß Fahrzeugbeschleunigungen, die mit Sicherheit nicht durch einen Crash verursacht worden sind, bei der Bildung des Auslösekriteriums unberücksichtigt bleiben.

Die zweite Eingangsgröße E2 ist die Geschwindigkeitsänderung des Fahrzeugs bezogen auf die Laufzeit i. Diese Eingangsgröße E2 wird aus Abtastwerten der Beschleunigung nach folgender Vorschrift gebildet:

$$E2 = \frac{\sum_{j=0}^{i} a(j)\Delta t}{i},$$

wobei a(j) der j-te Abtastwert der Beschleunigung, $\Delta t$ die Abtastzeit und i die Laufzeit ist.

Die dritte Eingangsgröße E3 stellt einen Mittelwert der gemessenen Beschleunigung dar und wird nach folgender Vorschrift gebildet:

$$E3 = \frac{\frac{a(i)+a(i + 1)}{2} - \frac{a(i - 1) + a(i - 1)}{2}}{\Delta t}$$

Die Eingangsgröße 2, welche im Prinzip die Steigung der Geschwindigkeitsänderung des Fahrzeugs darstellt, und die Eingangsgröße E3, die dem Mittelwert der gemessenen Beschleunigung entspricht, sind gegenüber Beschleunigungen stark gedämpft, die durch Reparaturcrashes oder Schlaglochfahrten oder Überfahren von Bordsteinen hervorgerufen werden, aber nicht zu einer Auslösung des Rückhaltesystems führen dürfen.

In dem Fuzzy-Klassifikator FZK findet zunächst, wie durch die Einheit FZ angedeutet, die Fuzzifizierung statt. Bei der Fuzzyfizierung werden jeder Eingangsgröße E1, E2, E3 die Zugehörigkeitswerte zu vorgegebenen Klassen (auch als linguistische variablen bezeichnet) bestimmt. In den Figuren 2a, 2b und 2c sind die Zugehörigkeitsfunktionen zu den Eingangsgrößen E1, E2 und E3 dargestellt.

In Figur 2a ist die Eingangsgröße E1 in eine Klasse für kleine Werte k1, in eine Klasse für mittlere Werte m1 und in eine Klasse für große Werte g1 eingeteilt. Der Zugehörigkeitsgrad ZG1 jedes Wertes der Eingangsgröße E1 zu den einzelnen Klassen k1, m1 und g1 läßt sich an der Ordinate des Koordinatensystems ablesen.

In der Figur 2b besteht die Zugehörigkeitsfunktion für die Eingangsgröße E2 ebenfalls aus drei Klassen, eine für kleinere Werte k2, eine für mittlere Werte m2 und eine für größere Werte g2. Dem Koordinatensystem kann man die Zugehörigkeitsgrade ZG2 der Eingangsgröße E2 zu den einzelnen Klassen k2, m2 und G2 entnehmen.

Die Zugehörigkeitsgrade ZG3 der dritten Eingangsgröße E3 zu ebenfalls drei Klassen k3, m3 und g3 geht aus der Figur 2c hervor.

Die Einteilung der Klassen für jede Eingangsgröße, d.h. deren Grenzen und Anstiegsflanken an den Grenzen, werden nach einer Vielzahl simulierter Crashtypen optimiert. Die Klassenverläufe der drei Zugehörigkeitsfuntionen in den Figuren 2a, 2b und 2c sind beispielhaft ausgewählt; sie müssen für jeden Fahrzeugtypen individuell ermittelt werden. Rechentechnisch ist es am einfachsten, wenn die einander überkreuzenden Anstiegs- und Abfallflanken der einzelnen Klassen linear verlaufen.

In der zweiten Einheit RB des Fuzzy-Klassifikators FZK befindet sich die Regelbasis RB. In der Regelbasis RB sind Verknüpfungsregeln zwischen den einzelnen Eingangsgrößen E1, E2, E3 und deren Klassenzugehörigkeit abgelegt. Bei drei Eingangsgrößen und drei Klassen je Eingangsgräße ergeben sich 27 Regeln, die in den nachfolgenden Tabellen wiedergegeben werden. Die Regelbasis hat wegen der drei Eingangsgrößen eine dreidimensionale Form. Um eine übersichtliche zweidimensionale Darstellung zu erhalten, wird sie in drei Teilregelbasen aufgeteilt. Jede dieser drei Teilregelbasen steht für eine Klasse der Eingangsgröße E1. Soll eine Verknüpfung zwischen den Eingangsgrößen E1, E2, E3 zu einer Auslösung führen, so ist an der entsprechenden Stelle in der Teilregelbasis eine 1 eingetragen; eine Nichtauslösung ist durch eine 0 gekennzeichnet. Die Regeln sind durch in Klammern stehende Ziffern durchnumeriert. Nachfolgend werden die einzelnen Regeln anhand der Teilregelbasen erläutert.

| Teilregelbasis für E1 → k1: | | | |
|---|---|---|---|
| E1 → k1 | E2 → k2 | E2 → m2 | E2 → g2 |
| E3 → k3 | 1 (1) | 1 (4) | 1 (7) |
| E3 → m3 | 1 (2) | 1 (5) | 1 (8) |
| E3 → g3 | 1 (3) | 1 (6) | 0 (9) |

Regel 1:

Wenn die Eingangsgröße E3 zur Klasse k3, die Eingangsgröße E2 zur Klasse k2 und die Eingangsgröße E1 zur Klasse k1 gehört, dann muß ausgelöst werden. Die Auslöseeigenschaft wurde auf die Bedingungen, daß die Eingangsgröße E3 zur Klasse k3 und die Eingangsgröße E2 zur Klasse k2 gehört, zurückgeführt. Jede dieser beiden Bedingungen rechtfertigt eine Auslösung. Damit ergibt sich für die Regeln 2, 3, 4 und 7 ebenfalls eine Auslösung.

Regel 5:

Wenn die Eingangsgröße E3 zur Klasse m3, die Eingangsgröße E2 zur Klasse m2 und die Eingangsgröße E1 zur Klasse k1 gehört, dann muß eine Auslösung erfolgen. Die Auslöseeigenschaft wurde wiederum auf die Bedingungen, daß die Eingangsgröße E3 zur Klasse m3 und die Eingangsgröße E2 zur Klasse m2 gehört, zurückgeführt. Ist eine dieser beiden Bedingungen erfüllt, so rechtfertigt dies ebenfalls eine Auslösung. Damit erfolgt auch bei den Regeln 6 und 8 eine Auslösung.

Regel 9:

Bei dieser Regel greift keine der zuvor beschriebenen Auslösebedingungen, weshalb bei ihr keine Auslösung erfolgen darf.

| Teilregelbasis für E1 → m1: | | | |
|---|---|---|---|
| E1 → m1 | E2 → k2 | E2 → m2 | E2 → g2 |
| E3 → k3 | 1 (10) | 1 (13) | 1 (16) |
| E3 → m3 | 1 (11) | 1 (14) | 1 (17) |
| E3 → g3 | 1 (12) | 0 (15) | 0 (18) |

Regel 10:

Wenn die Eingangsgröße E3 zu der Klasse k3, die Eingangsgröße E2 zur Klasse k2 und die Eingangsgröße E1 zur Klasse m1 gehört, dann muß eine Auslösung erfolgen. Wenn also die Bedingungen, daß die Eingangsgröße E3 zur Klasse k3 und die Eingangsgröße E2 zur Klasse k2 gehört, erfüllt sind, dann rechtfertigt dies eine Auslösung. Damit muß also auch bei den Regeln 11, 12, 13, und 16 ausgelöst werden.

Regel 14:

Wenn die Eingangsgröße E3 zur Klasse m3, die Eingangsgröße E2 zur Klasse m2 und die Eingangsgröße E1 zur Klasse m1 gehört, dann muß ausgelöst werden. Die Bedingung, daß die Eingangsgröße E3 zur Klasse m3 gehört, führt zur Auslösung. Damit muß bei Regel 17 ebenfalls ausgelöst werden.

Regel 15:

Wenn die Eingangsgröße E3 zur Klasse g3, die Eingangsgröße E2 zur Klasse m2 und die Eingangsgröße E1 zur Klasse m1 gehört, dann darf nicht ausgelöst werden. Da keine der zuvor genannten Auslösebedingung (E3 -> k3, E -> m3 und E2 -> k2) erfüllt wird, handelt es sich genau wie bei Regel 18 um eine Nichtauslöseregel.

| Teilregelbasis für E1 → g1: | | | |
|---|---|---|---|
| E1 → g1 | E2 → k2 | E2 → m2 | E2 → g2 |
| E3 → k3 | 1 (19) | 1 (22) | 1 (25) |
| E3 → m3 | 1 (20) | 1 (23) | 1 (26) |
| E3 → g3 | 0 (21) | 0 (24) | 0 (27) |

Regel 19:

Wenn die Eingangsgröße E3 zur Klasse k3, die Eingangsgröße E2 zur Klasse k2 und die Eingangsgröße E1 zur Klasse g1 gehört, muß ausgelöst werden. Die Bedingung, daß die Eingangsgröße E3 zur Klasse k3 gehört, ist für die Auslösung verantwortlich. Damit ergeben sich die Regeln 22 und 25 analog als Auslöseregeln.

Regel 20:

Wenn die Eingangsgröße E3 zur Klasse m3, die Eingangsgröße E2 zur Klasse k2 und die Eingangsgröße E1 zur Klasse g1 gehört, dann muß ausgelöst werden. Die Auslösung hängt also von der Bedingung, daß die Eingangsgröße E3 zur Klasse m3 gehört, ab. Damit sind die Regeln 23 und 26 ebenfalls Auslöseregeln.

Regel 21:

Wenn die Eingangsgröße E3 zur Klasse g3, die Eingangsgröße E2 zur Klasse k2 und die Eingangsgröße E1 zur Klasse g1 gehört, darf nicht ausgelöst werden. Die zuvor genannten Regeln für eine Auslösung hingen von der Bedingung ab, daß die Eingangsgröße E3 zur Klasse k3 oder die Eingangsgräße E3 zur Klasse m3 gehört. Diese Bedingung ist nicht erfüllt, und damit wird die Regel 21 wie auch die Regeln 24 und 27 zu einer Nichtauslöseregel.

Nun werden, wie in der Fuzzy-Logik üblich, für alle Regeln Gültigkeitsgrade ermittelt. Der Gültigkeitsgrad einer Regel wird mit einem Verknüpfungsoperator bestimmt. An den Eingängen des Verknüpfungsoperators liegen jeweils die Zugehörigkeitsgrade ZGE1, ZGE2, ZGE3 der Eingangsgrößen E1, E2, E3 zu den in den Regeln spezifizierten Klassen. Zwei gebräuchliche Verknüpfungsoperatoren sind der UND- und der ODER-Operator. Der UND-Operator wählt das Minimum der angelegten Zugehörigkeitsgrade aus, wogegen der ODER-Operator das Maximum auswählt. So gibt es also für jede Regel einen Gültigkeitsgrad der zwischen 0 und 1 liegt. Nachdem die Gültigkeitsgrade aller Regeln ermittelt worden sind, wird die Maximum-Interferenz-Methode angewendet, das heißt, es wird von allen Auslöse-Regeln der höchste Gültigkeitsgrad und ebenso von allen Nichtauslöse-Regeln der größte Gültigkeitsgrad ausgewählt.

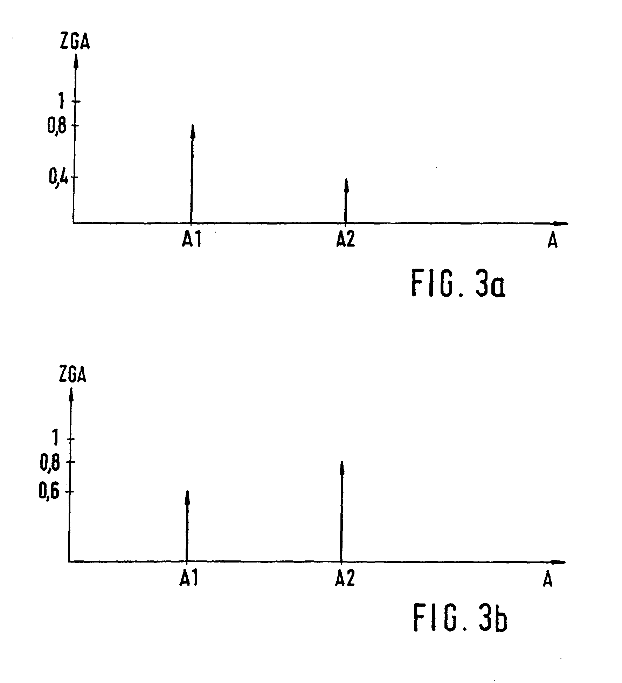

Im Fuzzy-Klassifikator wird zum Schluß, wie durch die Einheit DF angedeutet, die Defuzzyfizierung durchgeführt. Es wird hier beispielsweise eine sehr einfache Defuzzyfizierung ausgewählt, nämlich die sogenannte Singleton-Methode. Dabei wird eine Zugehörigkeitsfunktion für die Ausgangsgröße A, die für die Auslösung bzw. Nichtauslösung des Rückhaltesystems verantwortlich ist, gebildet. Diese besteht nicht aus kontinuierlich verlaufenden trapez- oder dreieckförmigen Funktionen für die einzelnen Klassen sondern aus sogenannten Singletons. Unter einem Singleton versteht man ein diskretes Wertepaar. Das hier aus zwei Ausgangsklassen A1 und A2 und dem Zugehörigkeitsgrad ZGEA besteht. Die Ausgangsklasse A1 steht für Nichtauslösen und die Ausgangsklasse A2 für Auslösen. Der aus der Interferenzbildung hervorgegangene Gültigkeitsgrad der Nichtauslöse-Regeln wird auf den Zugehörigkeitsgrad ZGA der Ausgangsklasse A1 und der Gültigkeitsgrad der Auslöse-Regeln auf den Zugehörigkeitsgrad ZGA der Ausgangsklasse A2 übertragen. In der Figur 3a ist ein Ausführungsbeispiel dargestellt, bei dem die Ausgangsklasse A1 für Nichtauslösen einen höheren Zugehörikgeitsgrad hat als die Ausgangsklasse A2 für Auslösen, und in der Figur 3b ist ein Beispiel für einen umgekehrten Fall dargestellt.

Schließlich führt eine Auswerteschaltung AS einen Vergleich zwischen den Zugehörigkeitsgraden der Ausgangsklassen A1 und A2 durch und entscheidet für Auslösen, wenn der Zugehörigkeitsgrad der Ausgangsklasse A2 größer ist als der Zugehörigkeitsgrad der Ausgangsklasse A1, und entscheidet für Nichtauslösen, wenn der Zugehörigkeitsgrad der Ausgangsklasse A1 größer ist als der Zugehörigkeitsgrad der Ausgangsklasse A2. In den in den Figuren 3a und 3b dargestellten Beispielen würde also im Fall der Figur 3a nicht ausgelöst und im Fall der Figur 3b ausgelöst.

Natürlich kann anstelle der einfachen Singleton-Methode auch eine andere bekannte Defuzzyfizierungs-Methode (z.B. Schwerpunktmethode) angewendet werden.

**Patentansprüche**

1. Verfahren zur Bildung eines Auslösekriteriums für ein Rückhaltesystem in einem Fahrzeug, bei dem die Beschleunigung des Fahrzeugs in einer oder mehreren Richtungen gemessen wird und aus der gemesssenen Beschleunigung mit Hilfe einer Fuzzy-Methode ein Kriterium abgeleitet wird, anhand dessen über ein Auslösen oder Nichtauslösen des Rückhaltesystems entschieden wird, **dadurch ge-** **kennzeichnet, daß** das Auslösekriterium mit Hilfe eines Fuzzy-Klassifikators (FZK) gebildet wird, dem mindestens zwei Eingangsgrößen (E1, E2, E3) zugeführt werden, daß eine erste Eingangsgröße (E1) eine Laufzeit ist, die mit Überschreiten einer vorgegebenen Schwelle durch die gemessene Beschleunigung beginnt, und daß eine zweite Eingangsgröße (E2) die aus der gemessenen Beschleunigung ermittelte Geschwindigkeitsänderung des Fahrzeugs berücksichtigt.

2. Verfahren nach Anspruch 1, **dadurch gekennzeichnet, daß** die zweite Eingangsgröße (E2) aus Abtastwerten der Beschleunigung nach folgender Vorschrift gebildet wird:

$$E2 \ = \ \frac{\sum_{j=0}^{i} a(j)\Delta t}{i} \ ,$$

wobei a(j) der j-te-Abtastwert der Beschleunigung, $\Delta t$ die Abtastzeit und i die Laufzeit ist.

3. Verfahren nach Anspruch 1, **dadurch gekennzeichnet, daß** dem Fuzzy-Klassifikator (FZK) eine dritte Eingangsgröße (E3) zugeführt wird, die einen Mittelwert der gemessenen Beschleunigung darstellt.

4. Verfahren nach Anspruch 3, **dadurch gekennzeichnet, daß** die dritte Eingangsgröße (E3) nach folgender Vorschrift gebildet wird:

$$E3 = \frac{\frac{a(i)+a(i-1)}{2} - \frac{a(i-1) + a(i-2)}{2}}{\Delta t},$$

wobei a(i), a(i-1), a(i-2) Abtastwerte der Beschleunigung sind und $\Delta t$ die Abtastzeit ist.

5. Vorrichtung zur Bildung eines Auslösekriteriums für ein Rückhaltesystem in einem Fahrzeug, welche die Beschleunigung des Fahrzeugs in einer oder mehreren Richtungen mißt und aus der gemessenen Beschleunigung mit Hilfe einer Fuzzy-Methode ein Kriterium ableitet, anhand dessen über ein Auslösen oder ein Nichtauslösen des Rückhaltesystems entschieden wird, **dadurch gekennzeichnet, daß** ein Fuzzy-Klassifikator (FZK) aus mindestens zwei Eingangsgrößen (E1, E2, E3) das Auslösekriterium bildet, daß eine erste Eingangsgröße (E1) eine Laufzeit ist, die mit Überschreiten einer vorgegebenen Schwelle durch die gemessene Beschleunigung beginnt, und daß eine zweite Eingangsgröße (E2) die aus der gemessenen Beschleunigung ermittelte Geschwindigkeitsänderung des Fahrzeugs berücksichtigt.

## Claims

1. Method for forming a triggering criterion for a restraint system in a vehicle, in the case of which the acceleration of the vehicle is measured in one or more directions, and the measured acceleration is used to derive with the aid of a fuzzy method a criterion with the aid of which a decision is taken on triggering or not triggering the restraint system, **characterized in that** the triggering criterion is formed with the aid of a fuzzy classifier (FZK) to which at least two input variables (E1, E2, E3) are fed, **in that** a first input variable (E1) is a propagation time which begins when a prescribed threshold is exceeded by the measured acceleration, and **in that** a second input variable (E2) takes account of the change in vehicle speed determined from the measured acceleration.

2. Method according to Claim 1, **characterized in that** the second input variable (E2) is formed from samples of the acceleration using the following rule:

$$E2 \; = \; \frac{\sum\limits_{j=0}^{i} a(j)\Delta t}{i} \; ,$$

a(j) being the jth sample of the acceleration, $\Delta t$ being the sampling time and i being the propagation time.

3. Method according to Claim 1, **characterized in that** the fuzzy classifier (FZK) is fed a third input variable (E3), which represents a mean value of the measured acceleration.

4. Method according to Claim 3, **characterized in that** the third input variable (E3) is formed using the following rule:

$$E3 = \frac{\dfrac{a(i)+a(i-1)}{2} - \dfrac{a(i-1)+a(i-2)}{2}}{\Delta t},$$

a(i), a(i-1), a(i-2) being samples of the acceleration, and $\Delta t$ being the sampling time.

5. Device for forming a triggering criterion for a restraint system in a vehicle, which measures the acceleration of the vehicle in one or more directions and derives from the measured acceleration with the aid of a fuzzy method a criterion with the aid of which a decision is made on triggering or not triggering the restraint system, **characterized in that** a fuzzy classifier (FZK) forms the triggering criterion from at least two input variables (E1, E2, E3), **in that** a first input variable (E1) is a propagation time which begins when a prescribed threshold is exceeded by the measured acceleration, and **in that** a second input variable (E2) takes account of the change in vehicle speed determined from the measured acceleration.

## Revendications

1. Procédé pour la formation d'un critère de déclenchement pour un système de retenue dans un véhicule dans lequel l'accélération du véhicule est mesurée dans une ou plusieurs directions et, à partir de l'accélération mesurée, on dérive, à l'aide d'une méthode floue, un critère sur la base duquel se décide un déclenchement ou un non déclenchement du système de retenue
**caractérisé en ce que**
le critère de déclenchement est formé à l'aide d'un classificateur flou (FZK) auquel sont acheminées au moins deux grandeurs d'entrée (E1, E2, E3), **en ce qu'**une première grandeur d'entrée (E1) est un temps de parcours qui commence avec le franchissement dans le sens ascendant d'un seuil prédéterminé par l'accélération mesurée et **en ce qu'**une deuxième grandeur d'entrée (E2) prend en considération la variation de vitesse du véhicule calculée à partir de l'accélération mesurée.

2. Procédé selon la revendication 1,
**caractérisé en ce que**
la deuxième grandeur d'entrée (E2) est formée à partir des valeurs détectées de l'accélération en appliquant la règle suivante :

$$E2 = \frac{\sum\limits_{j=0}^{i} a(j)\Delta t}{i}$$

où a(j) est la j-ième valeur détectée de l'accélération, $\Delta t$ est le temps de détection et $\underline{i}$ le temps de parcours.

3. Procédé selon la revendication 1,
**caractérisé en ce que**
au classificateur flou (FZK) est acheminée une troisième grandeur d'entrée (E3) qui représente une valeur moyenne de l'accélération mesurée.

**4.** Procédé selon la revendication 1,
**caractérisé en ce que**
la troisième grandeur d'entrée (E3) est formée selon la règle suivante :

$$E3 = \frac{\dfrac{a(i)+a(i-1)}{2} - \dfrac{a(i-1)+a(i-2)}{2}}{\Delta t}$$

où a(i), a(i-1), a(1-2) sont des valeurs détectées de l'accélération et $\Delta t$ est le temps de détection.

**5.** Dispositif pour la formation d'un critère de déclenchement pour un système de retenue dans un véhicule qui mesure l'accélération du véhicule dans une ou plusieurs directions et qui, à partir de l'accélération mesurée, dérive, à l'aide d'une méthode floue, un critère sur la base duquel se décide un déclenchement ou un non déclenchement du système de retenue
**caractérisé en ce qu'**
un classificateur flou (FZK) forme le critère de déclenchement à partir d'au moins deux grandeurs d'entrée (E1, E2, E3), **en ce qu'**une première grandeur d'entrée (E1) est un temps de parcours qui commence avec le franchissement dans le sens ascendant d'un seuil prédéterminé par l'accélération mesurée et **en ce qu'**une deuxième grandeur d'entrée (E2) prend en considération la variation de vitesse du véhicule qui est calculée à partir de l'accélération mesurée.

BS  SP  FZ  RB  DF  AS

E1,E2,E3

FZK

A1,A2

FIG.1

ZG1

1

0,5

k1  m1  g1

0  5  10  15  20  25  30  E1

FIG. 2a  [sec]

ZG2

1

0,5

k2  m2  g2

-0,08  -0,07  -0,06  -0,05  -0,04  E2

FIG. 2b  [m/sec²]

ZG3

1

0,5

k3  m3  g3

-12  -11  -10  -9  -8  -7  -6  E3

FIG. 2c  [m/sec³]

FIG. 3a

FIG. 3b